# EUROPÄISCHE PATENTSCHRIFT

(11) **EP 2 146 919 B1**
(45) Veröffentlichungstag und Bekanntmachung des Hinweises auf die Patenterteilung: **20.06.2012**
(21) Anmeldenummer: 08735563.2
(22) Anmeldetag: 28.03.2008
(51) Int. Cl.: B66B 7/06

(54) **ZUGMITTEL**
TRACTION MEANS
MOYEN DE TRACTION

(30) Priorität: 08.05.2007 DE 102007021434
(43) Veröffentlichungstag der Anmeldung: 27.01.2010
(73) Patentinhaber: ContiTech Antriebssysteme GmbH, 30165 Hannover (DE)
(72) Erfinder: GÖSER, Hubert, 29451 Dannenberg (DE)
(74) Vertreter: Finger, Karsten
(86) Internationale Anmeldenummer: PCT/EP2008/053729
(87) Internationale Veröffentlichungsnummer: WO 2008/135317

(56) Entgegenhaltungen:
- EP-A- 1 396 659
- DE-A1- 1 406 220
- US-A1- 2007 093 334

## Beschreibung

Die Erfindung betrifft ein Zugmittel, insbesondere für eine Aufzugsanlage, wobei das Zugmittel durch eine Traktionsscheibe antreibbar ist.

Zugmittel für Aufzugsanlagen sind an sich bekannt. Es werden häufig Seile, aber auch Riemen eingesetzt, wobei als Riemen sowohl Flachriemen als auch Keilrippenriemen oder auch Zahnriemen Verwendung finden.

Bei Seilen als Zugmittel ist jedem einzelnen Seil eindeutig eine eigene Seilrille auf der Traktionsscheibe zugeordnet. Dabei taucht jedes Seil zumindest zum Teil seines Durchmessers in die dazugehörige Seilrille ein. Jedes einzelne Seil ist ein eigenständiges Zugelement und kann auch einzeln betrieben werden. Für höhere Leistungen können entweder mehrere Seile parallel eingesetzt werden, oder der Seildurchmesser wird entsprechend erhöht. Das Einzelseil ist somit nicht nur Zugmittel zur Übertragung der Zugkräfte, sondern ist auch direkt an der Übertragung der Traktionskräfte beteiligt.

In der DE 14 06 220 A1 ist ein Zugmittel der genannten Art offenbart, welches aus einzelnen Zugdrähten gebildet ist, wobei die Zugdrähte in einer Ausführungsform mit Reitern miteinander verbunden und auf Abstand gehalten werden. Damit wird verhindert, dass die Drähte auf freier Länge zu stark gegeneinander schwingen.

Seile haben gegenüber der Riementechnik den Vorteil, dass die Kraft direkt von der Traktionsscheibe auf die Seile übertragbar ist. Bei der Riementechnik liegt zwischen den eigentlichen Zugträgern und der Traktionsscheibe noch das verbindende Elastomermaterial.

Bei der Verwendung von Riemen sind immer mehrere nebeneinander liegende Seile als Zugelemente in einem gemeinsamen Riemenkörper eingebettet. Die Zugelemente sind dabei vollständig mit dem Grundmaterial des Riemenkörpers umhüllt und die Ebene der Zugelemente liegt oberhalb der Kontaktebene, die der Riemen mit der entsprechenden Riemenscheibe bildet, wobei beim Zahnriemen die Riemenverzahnung, bei Keilrippen die Keilebene und bei Flachriemen direkt die flache Riemenoberfläche als Kontaktebene betrachtet werden kann.

Die Zugelemente sind somit ausschließlich zur Übertragung der Zugkräfte zuständig. Für höhere Leistungen können breitere Riemen oder Riemen einer höheren Leistungsklasse mit größerer Riementeilung und stärkeren Zugelementen eingesetzt werden.

Die Riemen sind grundsätzlich deutlich breiter als hoch, um einen stabilen Riemenlauf auf der Scheibe zu gewährleisten.

Die EP 1 396 458 A2 beschreibt eine Aufzugseinrichtung, bei der als Zugmittel ein mit Festigkeitsträgern verstärkter Flachriemen aus elastomeren Material verwendet wird. Die EP 1 555 234 B1 zeigt eine Aufzugsanlage mit einem Keilrippenriemen.

Riemen bieten gegenüber den Seilen den Vorteil, dass einerseits die Handhabung einfacher ist, da nicht einzelne Seile auf korrespondierende Nuten der Traktionsscheibe aufgelegt werden müssen, und dass problemlos auch kleine Traktionsscheibendurchmesser einsetzbar sind, da die eingebetteten Zugträger meist relativ kleine Durchmesser aufweisen. Außerdem sind Riemen als Zugmittel nahezu wartungsfrei, da keine Schmierung erfoderlich ist.

Die übertragbare Kraft ist aber neben der Reibung zwischen Traktionsscheibe und Elastomer auch von der Qualität der Einbettung der Zugträger im Elastomer, d. h., von der Haftfähigkeit zwischen Elastomer und Zugträger sowie von der Scherfestigkeit des Elastomers abhängig.

Außerdem müssen beispielsweise bei Aufzugsanlagen aus Sicherheitsgründen immer mindestens zwei, in der Regel drei bis fünf Riemen parallel eingesetzt werden. Dadurch, dass die Riemen eine Vielzahl von dünnen Einzelseilen enthalten, wird der Riemen im Vergleich zu einem gleich starken Seil relativ breit. Werden jetzt mehrere Riemen parallel eingesetzt, sind relativ breite Traktionsscheiben und Umlenkscheiben erforderlich.

In der US 6 739 433 ist ein Zugmittel für eine Aufzugsanlage offenbart, das als profilierter Flachriemen ausgebildet ist, so dass die zur Reibung zwischen Traktionsscheibe und Riemen zur Verfügung stehende Fläche etwas größer ist. Die übertragbare Kraft ist damit etwas höher als bei einem nicht profilierten Flachriemen, jedoch ist auch hier die Zone der Kraftübertragung zwischen Traktionsscheibe und Zugmittel noch deutlich von den Zugträgern beabstandet, so dass das Elastomermaterial des Flachriemens relativ stark auf Scherung beansprucht ist.

Der Erfindung liegt die Aufgabe zugrunde, ein Zugmittel der eingangs geschilderten Art zu schaffen, das einfach zu handhaben ist, wobei hohe Zugkräfte übertragbar sind und das Zugmittel gegenüber der bekannten Riementechnik eine weniger breit bauende Antriebseinheit ermöglicht.

Diese Aufgabe wird dadurch gelöst, dass das Zugmittel als Verbundseil ausgebildet ist, bei dem parallel liegende Einzelseile mit einem ersten Durchmesser mit je einer Elastomerschicht einer vorbestimmten Dicke zu Zugträgern mit je einem Gesamtdurchmesser ummantelt sind und die Zugträger durch eine einseitige elastomere Verbinderschicht im wesentlichen über ihre gesamte Länge miteinander verbunden sind und die Zugträger in korrespondierende Rillen der Traktionsscheiben eingreifen, wobei die elastomere Verbinderschicht auf der Seite der Zugträger angeordnet ist, die der in die Rillen der Traktionsscheibe eingreifenden Seite abgewandt ist und die Zugträger mindestens um 25 % ihres Gesamtdurchmessers in die Rillen der Traktionsscheibe eingreifen.

Durch diese Anordnung lassen sich die Vorteile der Riementechnik mit denen der Seiltechnik verbinden. Das Verbundseil ist so einfach zu handhaben und ist annähernd wartungsfrei wie ein Riemen. Aufgrund der direkt in die Rillen der Traktionsscheibe eingreifenden Zugträger ist eine hohe Kraftübertragung gegeben. Die Zone der Kraftübertragung zwischen Traktionsscheibe und Zugmittel liegt direkt in der Eingriffszone. Durch ihre geringe Dicke ist die Scherfestigkeit der Ummantelung nur von sehr geringer Bedeutung.

Es lassen sich dünne Seile verwenden, so dass geringe Traktionsscheibendurchmesser und schmale Traktionsscheiben möglich sind. Für jedes Verbundseil ist nur je ein Verbindungselement zur Anbindung an die beispielsweise zu hebenden Elemente notwendig.

In einer Weiterbildung der Erfindung liegt die Dicke der Ummantelung der Einzelseile im Bereich von 0,2 - 2 mm.

In einer Weiterbildung der Erfindung liegt die Dicke der Ummantelung der Einzelseile im Bereich von 0,5 - 1 mm.

Bei diesen geringen Dicken der Ummantelung ist diese besonders gering auf Scherung beansprucht und die übertragbare Zugkraft dementsprechend hoch.

In einer Weiterbildung der Erfindung ist die Ummantelung aus einem Elastomer ausgebildet, das sich von dem Elastomer der Verbinderschicht unterscheidet.

Durch die Verwendung verschiedenartiger Elastomere lässt sich eine besonders große Vielfalt an Materialkombinationen einsetzen, so dass sich das Verbundseil auf eine große Anzahl von Einsatzfällen individuell einstellen lässt.

In einer Weiterbildung der Erfindung ist das Elastomer oder sind die Elastomere-vorzugsweise ein Polyurethan oder Polyurethane.

Polyurethan weist sowohl gute Reib- als auch gute Hafteigenschaften auf und ist relativ unempfindlich gegen Scherung.

In einer Weiterbildung der Erfindung weist die Ummantelung der Einzelseile eine der Traktionsscheibe zugewandte Außenkontur auf, deren Querschnitt von einer Teilkreisform abweichend ausgebildet ist.

In einer Weiterbildung der Erfindung ist der Querschnitt der Außenkontur trapezförmig ausgebildet.

In einer Weiterbildung der Erfindung ist der Querschnitt der Außenkontur quadratisch ausgebildet.

In einer Weiterbildung der Erfindung ist der Querschnitt der Außenkontur konisch ausgebildet.

Die Ausgestaltung der Querschnitte der Ummantelung in verschiedene Geometrien hat den Vorteil, dass das Verbundseil damit einer Vielzahl von Traktionsscheibenprofilen anpassbar ist.

In einer Weiterbildung der Erfindung ist das Verhältnis aus Gesamtdurchmesser der Einzelseile a zur gesamten Dicke des Verbundseiles b ≤ 1.

In einer Weiterbildung der Erfindung weist die Verbinderschicht eine Dicke c auf, wobei c ≤ der halben Dicke b des Verbundseiles ist.

In einer Weiterbildung der Erfindung sind die Einzelseile des Verbundseiles derart voneinander beabstandet, dass der abstand der Mitten der Einzelseile t kleiner oder gleich ist dem fünffachen Durchmesser d der Einzelseile und minimal d + 1 mm beträgt.

Diese geometrischen Verhältnisse dienen der optimalen Gestaltung der Verbundseile, so dass die Vorteile gegenüber Flachriemen bestehen bleiben und die Einzelseile weit genug in die Rillen der Traktionsscheibe eingreifen.

In einer weiteren Ausbildung der Erfindung weist die Verbinderschicht auf ihrer der Traktionsscheibe abgewandten Seite eine profilierte Oberfläche auf.

Diese Profilierung dient zur besseren Führung der Verbundseile, wenn diese über ihren Rücken um Umlenkrollen geführt werden müssen.

In einer weiteren Ausbildung der Erfindung weist jedes Verbundseil mindestens vier Einzelseile auf.

Dadurch ist die Sicherheit gegen Verdrehungen der Verbundseile verbessert, so dass ein sicherer Einlauf in die Eingriffszone der Traktionsscheibe gewährleistet ist.

In einer Weiterbildung der Erfindung sind die Einzelseile im Wechsel zwischen S- und Z-Schlag angeordnet.

In einer weiteren Ausbildung der Erfindung ist die Anzahl der Einzelseile pro Verbundseil gradzahlig. -

Durch die Verwendung von Seilen abwechselnd in Z- und in S-Schlag ist die Gefahr von lastabhängigen Verdrehungen besonders gering. Die Gradzahligkeit verbessert diesen Effekt.

In einer weiteren Ausbildung der Erfindung bestehen die Einzelseile aus Stahl.

Stahl vereint eine hohe Zugfestigkeit und Biegewechselfestigkeit mit einer guten Haftfähigkeit an Elastomeren.

In einer Weiterbildung der Erfindung liegt der Durchmesser der Einzelseile zwischen 1,5mm und 8mm. -

In einer Weiterbildung der Erfindung liegt der Durchmesser der Einzelseile zwischen 1,8 und 5,5mm.

In diesem Durchmesserbereich ist ein besonders gutes Verhältnis aus minimalem Durchmesser der Traktionsscheibe und hoher Traglast gegeben.

In einer Weiterbildung der Erfindung weist die der Traktionsscheibe abgewandte Seite der Verbundseile eine Abdeckbeschichtung auf.

In einer Weiterbildung der Erfindung weist die der Traktionsscheibe zugewandte Seite der Verbundseile eine Abdeckbeschichtung auf.

In einer Weiterbildung der Erfindung ist die Abdeckbeschichtung aus einem flächigen Textil, beispielsweise einem Gewebe ausgebildet.

Mit einer derartigen Beschichtung lässt sich sowohl die Reibung als auch die Verschleißfestigkeit der Verbundseile verbessern.

Anhand der Zeichnung wird nachstehend ein Beispiel der Erfindung näher erläutert.

Es zeigt:
- Fig. 1: einen Querschnitt durch einen erfindungsgemäßes Verbundseil,
- Figuren 2-4: Verbundseile mit unterschiedlicher Querschnittsform der Ummantelung der Einzelseile,
- Fig. 5: ein Verbundseil mit auf dem Rücken angeordneten Rippenprofil und
- Fig. 6: ein Verbundseil mit Abdeckbeschichtungen im Eingriff mit einer Traktionsscheibe.

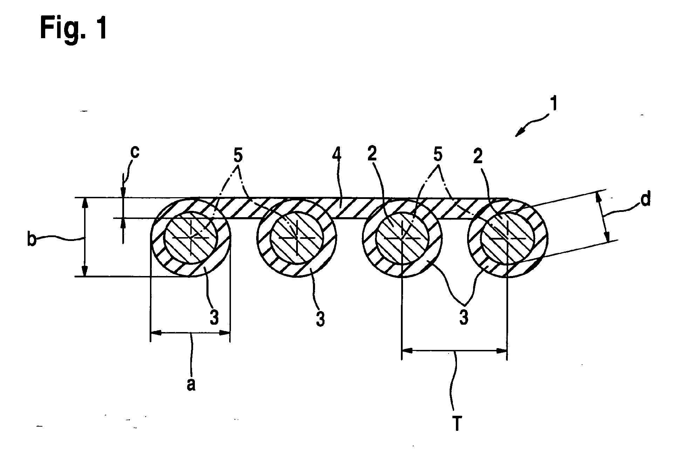

Das in Fig. 1 im Querschnitt gezeigte Verbundseil 1 weist vier Einzelseile 2 mit einem Durchmesser d auf, die jeweils mit einer Ummantelung 3 aus einem Elastomer ummantelt sind. Die Einzelseile 2 bilden mit der Ummantelung 3 einen Gesamtdurchmesser a.

Die Einzelseile 2 sind einseitig mit einer Verbinderschicht 4 mit einer Dicke c untereinander fest verbunden, wobei die Verbindung durch Zusammenvulkanisieren der elastomeren Ummantelung 3 mit der Verbinderschicht 4 und den Einzelseilen 2 erzeugt ist. Die Verbinderschicht 4 ist auf der Seite der Einzelseile 2 angeordnet, die einer hier nicht gezeigten Traktionsscheibe abgewandt ist.

Die Einzelseile 2 weisen jeweils einen Mittelpunkt 5 auf, wobei die Mittelpunkte 5 der Einzelseile 2 und das Maß T voneinander beabstandet sind. Das Verbundseil weist eine Gesamtdicke b auf

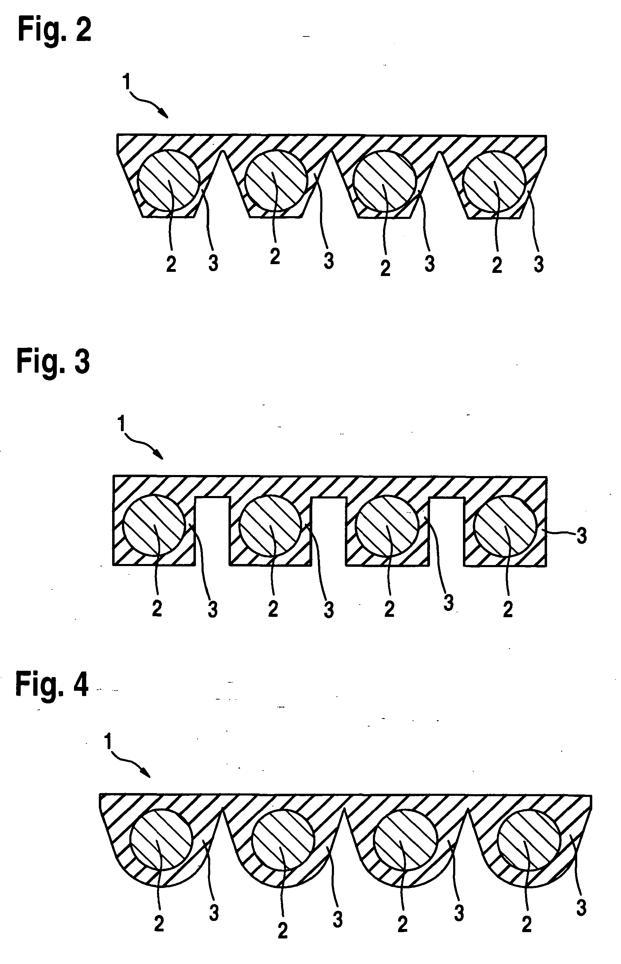

In den Figuren 2, 3 und 4 sind Verbundseile 1 dargestellt, deren Ummantelung 3 der Einzelseile 2 eine von der Kreisform abweichende Geometrie aufweisen. Diese Geometrien verbessern den Eingriff der Verbundseile in hier nicht gezeigte Traktionsscheiben, die ein von der runden Form abweichendes Profil aufweisen. So können entsprechend gestalteten Verbundseile 1 ggfs. auch auf Traktionsscheiben von Keilrippenriemen eingesetzt werden.

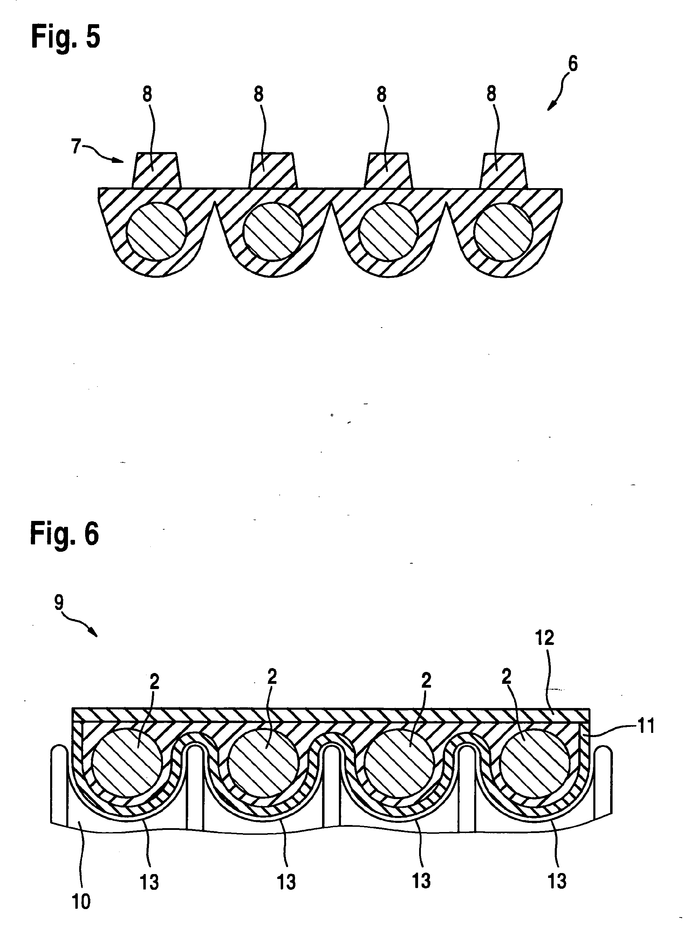

In Fig. 5 ist ein Verbundseil 6 dargestellt, welches auf einer hier nicht gezeigten Traktionsscheibe abgewandten Rückenseite ein Rippenprofil 7 aus voneinander beabstandeten Längsrippen 8 aufweist. Die Längsrippen können bei Bedarf in entsprechende hier nicht gezeigte Umlenkrollen eingreifen und verbessern so die Führung des Verbundseils 6.

In Fig. 6 ist ein Verbundseil 9 gezeigt, das auf seiner einer Traktionsscheibe 10 zugewandten Seite eine erste Abdeckbeschichtung 11 und auf seiner der Traktionsscheibe 10 abgewandten Seite eine zweite Abdeckbeschichtung 12 aufweist. Die Traktionsscheibe 10 weist vier Rillen 13 mit nahezu halbkreisförmigem Querschnitt auf, in die die mit dem Elastomer 3 ummantelten und der ersten Abdeckbeschichtung 11 beschichteten Einzelseile 2 eingreifen.

Die Abdeckbeschichtungen 11 und 12 sind aus verschiedenen Geweben ausgebildet, so dass die erste Abdeckbeschichtung 11 eine besonders hohe Verschleißfestigkeit, weil die Reibung zwischen Verbundseil 9 und Traktionsscheibe 10 begünstigender Oberfläche aufweist und die zweite Abdeckbeschichtung 12 eine besonders glatte und verschleißfeste Oberfläche aufweist. Die Abdeckbeschichtung 11 und 12 verbessern die Eigenschaften des Verbundseils 9 im Hinblick auf die übertragbaren Lasten und die Lebensdauer des Verbundseils 9.

### Bezugszeichenliste

### (Teil der Beschreibung)

- 1: Verbundseil
- 2: Einzelseile des Verbundseils 1
- 3: Ummantelung der Einzelseile 2
- 4: Verbinderschicht
- 5: Mittelpunkt des Querschnitts der Einzelseile 2
- 6: Verbundseil mit Rückenprofil
- 7: Rippenprofil des Verbundseils 6
- 8: Längsrippen des Verbundseils 6
- 9: Verbundseil mit Abdeckbeschichtung
- 10: Traktionsscheibe
- 11: erste Abdeckbeschichtung
- 12: zweite Abdeckbeschichtung
- 13: Rillen der Traktionsscheibe 10

## Patentansprüche

1. Zugmittel (1), insbesondere für eine Aufzugsanlage, wobei das Zugmittel (1) durch eine Traktionsscheibe antreibbar ist, wobei das Zugmittel als Verbundseil (1) ausgebildet ist, bei dem parallel liegende Einzelseile (2) mit einem ersten Durchmesser mit je einer Elastomerschicht (3) einer vorbestimmten Dicke zu Zugträgern (2, 3) mit je einem Gesamtdurchmesser ummantelt sind und die Zugträger (2, 3) durch eine einseitige elastomere Verbinderschicht (4) im wesentlichen über ihre gesamte Länge miteinander verbunden sind und die Zugträger (2, 3) in korrespondierende Rillen (13) der Traktionsscheiben (10) eingreifen, wobei die elastomere Verbinderschicht (4) auf der Seite der Zugträger (2, 3) angeordnet ist, die der in die Rillen (13) der Traktionsscheibe (10) eingreifenden Seite abgewandt ist und die Zugträger (2, 3) mindestens um 25 % ihres Gesamtdurchmessers in die Rillen (13) der Traktionsscheibe (10) eingreifen.

2. Zugmittel nach Anspruch 1, **dadurch gekennzeichnet, dass** die Dicke der Ummantelung (3) der Einzelseile (2) im Bereich von 0,2 - 2 mm liegt.

3. Zugmittel nach Anspruch 2, **dadurch gekennzeichnet, dass** die Dicke der Ummantelung (3) der Einzelseile (2) im Bereich von 0,5 - 1 mm liegt.

4. Zugmittel nach Anspruch 1, 2 oder 3, **dadurch gekennzeichnet, dass** die Ummantelung (3) aus einem Elastomer ausgebildet ist, das sich von dem Elastomer der Verbinderschicht (4) unterscheidet.

5. Zugmittel nach mindestens einem der vorstehenden Ansprüche, **dadurch gekennzeichnet, dass** das Elastomer (3, 4) vorzugsweise ein Polyurethan ist oder die Elastomere (3, 4) vorzugsweise Polyurethane sind.

6. Zugmittel nach mindestens einem der vorstehenden Ansprüche, **dadurch gekennzeichnet, dass** die Ummantelung (3) der Einzelseile (2) eine der Traktionsscheibe (10) zugewandte Außenkontur aufweist, deren Querschnitt von einer Teilkreisform abweichend ausgebildet ist.

7. Zugmittel nach mindestens einem der vorstehenden Ansprüche, **dadurch gekennzeichnet, dass** das Verhältnis aus Gesamtdurchmesser der Einzelseile (2) a zur gesamten Dicke des Verbundseiles (1) b ≤ 1 ist.

8. Zugmittel nach mindestens einem der vorstehenden Ansprüche, **dadurch gekennzeichnet, dass** die Verbinderschicht (4) eine Dicke c aufweist, wobei c ≤ der halben Dicke b des Verbundseiles (1) ist.

9. Zugmittel nach mindestens einem der vorstehenden Ansprüche, **dadurch gekennzeichnet, dass** die Einzelseile (2) des Verbundseiles (1) derart voneinander beabstandet sind, dass der Abstand T der Mitten (5) der Einzelseile (2) kleiner oder gleich ist dem fünffachen Durchmesser d der Einzelseile (2) und minimal d + 1 mm beträgt.

10. Zugmittel nach mindestens einem der vorstehenden Ansprüche, dadurch-gekennzeichnet, dass die Verbinderschicht (4) auf ihrer der Traktionsscheibe (10) abgewandten Seite eine profilierte Oberfläche (7, 8) aufweist.

11. Zugmittel nach mindestens einem der vorstehenden Ansprüche, **dadurch gekennzeichnet, dass** jedes Verbundseil (1) mindestens vier Einzelseile (2) aufweist.

12. Zugmittel nach mindestens einem der vorstehenden Ansprüche, **dadurch gekennzeichnet, dass** die Einzelseile (2) im Wechsel zwischen S- und Z- Schlag angeordnet sind.

13. Zugmittel nach mindestens einem der vorstehenden Ansprüche, **dadurch gekennzeichnet, dass** der Durchmesser der Einzelseile (2) zwischen 1,5mm und 8mm liegt.

14. Zugmittel nach mindestens einem der vorstehenden Ansprüche, **dadurch gekennzeichnet, dass** der Durchmesser der Einzelseile (2) zwischen 1,8mm und 5,5mm liegt.

15. Aufzugsanlage mit einer Zugmittel und Traktionsscheiben (10) aufweisenden Antriebs-Übertragungsanordnung, **dadurch gekennzeichnet, dass** das Zugmittel als Verbundseil (1) nach Anspruch 1 ausgebildet ist.

## Claims

1. Traction means (1), in particular for a lift system, wherein the traction means (1) can be driven by a traction pulley, wherein the traction means is configured as a composite cable (1), in which parallellying individual cables (2) of a first diameter are encased with respectively an elastomer layer (3) of predetermined thickness to form tension supports (2, 3) of a respective overall diameter, and the tension supports (2, 3) are connected to one another by a one-sided elastomeric binder layer (4) substantially over their entire length and the tension supports (2, 3) engage in corresponding grooves (13) of the traction pulleys (10), wherein the elastomeric binder layer (4) is disposed on that side of the tension supports (2, 3) which is facing away from the side engaging in the grooves (13) of the traction pulley (10) and the tension supports (2, 3) engage by at least 25% of their overall diameter in the grooves (13) of the traction pulley (10).

2. Traction means according to Claim 1, **characterized in that** the thickness of the casing (3) of the individual cables (2) lies within the range from 0.2. to 2 mm.

3. Traction means according to Claim 2, **characterized in that** the thickness of the casing (3) of the individual cables (2) lies within the range from 0.5 to 1 mm.

4. Traction means according to Claim 1, 2 or 3, **characterized in that** the casing (3) is formed of an elastomer which differs from the elastomer of the binder layer (4).

5. Traction means according to at least one of the preceding claims, **characterized in that** the elastomer (3, 4) is preferably a polyurethane or the elastomers (3, 4) are preferably polyurethanes.

6. Traction means according to at least one of the preceding claims, **characterized in that** the casing (3) of the individual cables (2) has an outer contour facing the traction pulley (10), the cross section of which is configured differently from a part-circle shape.

7. Traction means according to at least one of the preceding claims, **characterized in that** the ratio of overall diameter of the individual cables (2) a to the overall thickness of the composite cable (1) b ≤ 1.

8. Traction means according to at least one of the preceding claims, **characterized in that** the binder layer (4) has a thickness c, wherein c is ≤ half the thickness b of the composite cable (1).

9. Traction means according to at least one of the preceding claims, **characterized in that** the individual cables (2) of the composite cable (1) are mutually spaced in such a way that the distance T between the middles (5) of the individual cables (2) is less than or equal to five times the diameter d of the individual cables (2) and amounts minimally to d + 1 mm.

10. Traction means according to at least one of the preceding claims, **characterized in that** the binder layer (4) has on its side facing away from the traction pulley (10) a profiled surface (7, 8).

11. Traction means according to at least one of the preceding claims, **characterized in that** each composite cable (1) has at least four individual cables (2).

12. Traction means according to at least one of the preceding claims, **characterized in that** the individual cables (2) are arranged in the changeover between the S and the Z lay.

13. Traction means according to at least one of the preceding claims, **characterized in that** the diameter of the individual cables (2) lies between 1.5 mm and 8 mm.

14. Traction means according to at least one of the preceding claims, **characterized in that** the diameter of the individual cables (2) lies between 1.8 mm and 5.5 mm.

15. Lift system comprising a drive transmission arrangement having a traction means and traction pulleys (10), **characterized in that** the traction means is configured as a composite cable (1) according to Claim 1.

## Revendications

1. Moyen de traction (1), en particulier pour une installation d'ascenseur, le moyen de traction (1) pouvant être entraîné par une poulie de traction, le moyen de traction étant réalisé sous forme de câble composite (1), dans lequel des câbles individuels (2) situés parallèlement ayant un premier diamètre sont gainés d'une couche élastomère (3) d'épaisseur prédéterminée pour donner des supports de traction (2, 3) ayant un diamètre total, et les supports de traction (2, 3) étant connectés les uns aux autres essentiellement sur toute leur longueur par une couche de liaison élastomère unilatérale (4), et les supports de traction (2, 3) venant en prise dans des gorges correspondantes (13) des poulies de traction (10), la couche de liaison élastomère (4) étant disposée du côté des supports de traction (2, 3) qui est opposé au côté venant en prise dans les gorges (13) de la poulie de traction (10) et les supports de traction (2, 3) venant en prise au moins sur 25 % de leur diamètre total dans les gorges (13) de la poulie de traction (10).

2. Moyen de traction selon la revendication 1, **caractérisé en ce que** l'épaisseur de la gaine (3) des câbles individuels (2) se situe dans la plage de 0,2 à 2 mm.

3. Moyen de traction selon la revendication 2, **caractérisé en ce que** l'épaisseur de la gaine (3) des câbles individuels (2) se situe dans la plage de 0,5 à 1 mm.

4. Moyen de traction selon la revendication 1, 2 ou 3, **caractérisé en ce que** la gaine (3) est réalisée en un élastomère qui se distingue de l'élastomère de la couche de liaison (4).

5. Moyen de traction selon au moins l'une quelconque des revendications précédentes, **caractérisé en ce que** l'élastomère (3, 4) est de préférence un polyuréthane ou les élastomères (3, 4) sont de préférence des polyuréthanes.

6. Moyen de traction selon au moins l'une quelconque des revendications précédentes, **caractérisé en ce que** la gaine (3) des câbles individuels (2) présente un contour extérieur tourné vers la poulie de traction (10), dont la section transversale est réalisée de manière à s'écarter d'une forme en cercle partiel.

7. Moyen de traction selon au moins l'une quelconque des revendications précédentes, **caractérisé en ce que** le rapport entre le diamètre total des câbles individuels (2) a et l'épaisseur totale du câble composite (1) b est ≤ 1.

8. Moyen de traction selon au moins l'une quelconque des revendications précédentes, **caractérisé en ce que** la couche de liaison (4) présente une épaisseur c, avec c ≤ à la moitié de l'épaisseur b du câble composite (1).

9. Moyen de traction selon au moins l'une quelconque des revendications précédentes, **caractérisé en ce que** les câbles individuels (2) du câble composite (1) sont espacés les uns des autres de telle sorte que la distance T des centres (5) des câbles individuels (2) soit inférieure ou égale à cinq fois le diamètre d des câbles individuels (2) et vaille au minimum d + 1 mm.

10. Moyen de traction selon au moins l'une quelconque des revendications précédentes, **caractérisé en ce que** la couche de liaison (4) présente, sur son côté opposé à la poulie de traction (10), une surface profilée (7, 8).

11. Moyen de traction selon au moins l'une quelconque des revendications précédentes, **caractérisé en ce que** chaque câble composite (1) présente au moins quatre câbles individuels (2).

12. Moyen de traction selon au moins l'une quelconque des revendications précédentes, **caractérisé en ce que** les câbles individuels (2) sont disposés en alternance entre une course en S et une course en Z.

13. Moyen de traction selon au moins l'une quelconque des revendications précédentes, **caractérisé en ce que** le diamètre des câbles individuels (2) est compris entre 1,5 mm et 8 mm.

14. Moyen de traction selon au moins l'une quelconque des revendications précédentes, **caractérisé en ce que** le diamètre des câbles individuels (2) est compris entre 1,8 mm et 5,5 mm.

15. Installation d'ascenseur comprenant un moyen de traction et un agencement de transfert d'entraînement présentant des poulies de traction (10), **caractérisée en ce que** le moyen de traction est réalisé sous forme de câble composite (1) selon la revendication 1.
